# EUROPÄISCHE PATENTSCHRIFT

(11) **EP 1 480 806 B1**
(45) Veröffentlichungstag und Bekanntmachung des Hinweises auf die Patenterteilung: **27.07.2005**
(21) Anmeldenummer: 03701421.4
(22) Anmeldetag: 14.02.2003
(51) Int. Cl.: B29C 45/17

(54) **AUSWERFEREINHEIT MIT OVALRADGETRIEBE**
EJECTOR UNIT WITH ELLIPTICAL GEARWHEEL DRIVE
UNITE D'EJECTION A ENGRENAGE ELLIPTIQUE

(30) Priorität: 01.03.2002 CH 358022002
(43) Veröffentlichungstag der Anmeldung: 01.12.2004
(73) Patentinhaber: ProControl AG, 9230 Flawil (CH)
(72) Erfinder: STILLHARD, Bruno, CH-9011 St. Gallen (CH); SHIN, Dongwook, CH-9200 Gossau (CH)
(74) Vertreter: Gachnang, Hans Rudolf
(86) Internationale Anmeldenummer: PCT/CH2003/000108
(87) Internationale Veröffentlichungsnummer: WO 2003/074252

(56) Entgegenhaltungen:
- DE-C- 10 023 489
- JP-A- 11 114 969
- US-A- 5 639 486
- US-A1- 2002 005 599

## Beschreibung

### Technisches Gebiet

Die Erfindung betrifft eine Auswerfereinheit zum elektromotorisch steuerbaren Ausstossen von Spritzgiessteilen aus Spritzgiessformen über die Stossbewegung eines Auswerfers bzw. einer Auswerferplatte.

### Stand der Technik

Spritzgiessmaschinen weisen eine feststehende und ein bewegliche Formaufspannplatte auf. An den beiden Formaufspannplatten ist je eine Formhälfte befestigt, welche in geschlossener Stellung die sogenannten Formnester bzw. die Kavität für die Spritzgiessteile bilden. Die bewegliche Formaufspannplatte wird mit Hilfe einer Schliesseinheit verschoben und so das Spritzgiesswerkzeug in eine geschlossene Stellung und in eine Öffnungsstellung verfahren. Gleichzeitig dient die Schliesseinheit zum Aufbringen des Formzuhaltedrucks.

Die Schliesseinheit muss enorme Kräfte übertragen und muss deshalb massiv gebaut werden. Am bekanntesten sind sogenannte Kniehebelverschlüsse, welche entweder elektromotorisch oder hydraulisch angetrieben werden. In jüngster Zeit werden vermehrt Kurbeltriebe eingesetzt. Beiden gemeinsam ist die massive Bauweise und das Ausnutzen gleichsam jedes Centimeters in dem Bereich zwischen der Schliesseinheit und der beweglichen Form.

Das hergestellte Spritzgiessteil wird mit Hilfe eines oder mehrerer Auswerfer während des Öffnens des Formwerkzeuges oder bei geöffnetem Formwerkzeug aus diesem herausgedrückt. Bei schlecht entformbaren Teilen, sei es wegen der komplizierten Formgeometrie, oder infolge grosser Adhäsionskräfte, ist es dabei oft erforderlich, den Auswerfer mehrfach hin- und herzubewegen, um das Teil aus der Form zu lösen. Damit empfindliche Teile dabei keinen Schaden nehmen, muss das Auswerfen behutsam erfolgen.

Aus der US-PS 4 207 051 ist ein Auswerfer bekannt. Der für die Bewegung des Auswerferstifts verantwortliche Kurbeltrieb besteht aus einer Kurbelscheibe, die als Zahnrad ausgebildet ist. Die Zähne können mit den Zähnen zweier Zahnstangen, von denen die eine mit der beweglichen Formaufspannplatte und die andere mit der feststehenden Formaufspannplatte fest verbunden ist, wird die bewegliche Formaufspannplatte mit Hilfe der Schliesseinrichtung verfahren, wird diese Bewegung über die Zahnstangen auf die Kurbelscheibe übertragen, die über den exzentrisch auf den auf diesem angeordneten Hebel den Auswerferstift betätigt. Die Auswerferbewegung ist direkt mit der Bewegung der Formaufspannplatte gekoppelt.

Eine weitere Lösung ist in der EP-PA 0 657 271 dargestellt. Bei dieser Druckschrift lag die Aufgabe zugrunde, eine Vorrichtung so auszubilden, dass die Bewegung des Auswerferstifts von der Bewegung der Formaufspannplatte entkoppelt wird, so dass produktspezifische Auswurfcharakteristiken möglich sind und gleichzeitig für eine vollkommen symmetrische Kraftübertragung vom Kurbeltrieb auf den Auswerferstift gesorgt wird. Als Lösung schlägt die EP 0 657 271 vor, dass der Kurbeltrieb aus zwei parallel zueinander angeordneten Kurbelscheiben besteht, die synchron antreibbar sind und zwischen denen der den Schlitten verschiebende Hebel gelagert ist. Als Vorteil wird eine stabile Ausführung des erfindungsgemässen Kurbeltriebs genannt, wodurch darüber hinaus eine vollkommen symmetrische Kraftübertragung auf den Auswerferstift gewährleiset ist. Dabei können die Kurbelscheiben - wie bereits aus dem Stand der Technik bekannt ist - als Zahnräder ausgebildet sein, deren Zähne mit den Zähnen von jeweils einem Ritzel kämmen, die auf der durch den Elektromotor angetriebenen Welle angeordnet sind. Der Auswurfzeitpunkt, die Auswerfergeschwindigkeit und - kraft können daher über den Antrieb individuell auf das zu entformende Teil eingestellt werden. Die Auswurfbewegung kann alternativ schon während der Öffnungsbewegung der Form oder erst bei geöffneter Form beginnen. Geschwindigkeits- und Kraftverlauf können so eingestellt sein, dass auf den ersten Millimetern des Fahr-weges des Auswerferstifts bei geringer Geschwindigkeit eine grosse Kraft zum Losreissen des Spritzlings aufgebracht wird und danach bei geringerem Kraftaufwand und grösserer Geschwindigkeit die Auswurfbewegung beendet wird. Ebenso kann der Auswerferhub, je nach Art des hergestellten Teils, variiert werden. Eine mehrmalige Hin- und Herbewegung des Auswerferstifts bei schlecht entformbaren Teilen ist mit der erfindungsgemässen Vorrichtung sehr einfach und vor allen Dingen gezielt realisierbar.

Nachteilig bei der EP 0 657 271 ist der Platzbedarf. Der Raumbedarf für die Auswerfereinheit liegt in dem Bereich, in dem auch die Bewegung für Elemente für die Schliesseinheit stattfindet. Der Raumbedarf für die Schliesseinheit und der Raumbedarf für den Auswerfer ergeben die erforderliche Längenabmessung für den ganzen Teil der beweglichen Form mit der Schliesseinheit.

Eine weitere Auswerfereinheit ist aus der DE 100 23489 C bekannt. Der Erfindung wurde nun die Aufgabe zugrunde gelegt, die zuvor beschriebenen Vorteile, insbesondere eines Kurbeltriebes möglichst zu erhalten, jedoch den Raumbedarf zwischen der Schliesseinheit und der beweglichen Formaufspannplatte zu reduzieren.

### Darstellung der Erfindung

Die erfindungsgemässe Lösung ist dadurch gekennzeichnet, dass sie ein Ovalradgetriebe aufweist.

Vom Erfinder ist erkannt worden, dass ein Kurbeltrieb zwar ideal ist in Bezug auf den erforderlichen Kraft- und Geschwindigkeitsverlauf für den Auswerfer. Nachteilig ist dabei aber, dass die Kurbel dort angeordnet werden muss, wo die lineare Kraft eingeleitet werden muss, nämlich im Zentrum der Krafteinwirkung der Schliesseinheit. Ein Ovalgetriebe hat eine ähnliche Charakteristik wie ein Kurbelgetriebe und bietet die Möglichkeit, gleich wie eine Kurbel in einer ersten Phase einen Bereich mit maximaler Kraftübertragung und minimaler Geschwindigkeit und in einer zweiten Phase eine grosse Geschwindigkeit mit reduzierter Kraft zu nutzen. Ein Ovalradgetriebe ist ein nicht lineares Getriebe und hat geometrisch gesehen ähnliche Eigenschaften wie eine Kurvenscheibe. Der ganz grosse Vorteil des Ovalgetriebes liegt darin, dass es räumlich ausserhalb der Krafteinwirkung der Schliesseinheit angeordnet werden kann.

Die neue Lösung gestattet eine ganze Anzahl vorteilhafter Ausgestaltungen. Es wird dazu auf die Ansprüche 2 bis 12 verwiesen.

Vorzugsweise weist das Ovalgetriebe zwei Ovalräder auf, wobei das Ovalgetriebe mit einem Motorgetriebe direkt verbunden und ausserhalb des Formantriebbereiches angeordnet wird. Gemäss einer optimalen Lösung erfolgt die Stossbewegung der Auswerferplatte durch einen Zahnstangenantrieb, welcher über eine Antriebswelle mit dem Ovalgetriebe verbunden ist. Damit kann die gestellte Aufgabe sehr vorteilhaft gelöst werden. Die Lösung weist weitgehend die Vorteile einer Kurbellösung auf, ohne dessen Nachteile der zwingenden baulichen Platzierung.

Eine Kurbel hat die Eigenheit, dass in Totpunktnähe eine Kraft theoretisch gegen Unendlich entsteht. In der Praxis wird der Totpunktbereich jedoch gemieden, da das Zusammenspiel von Bewegung und Kraftaufbau sehr schlecht beherrschbar ist. Gerade beim Ausstossen von Spritzgiessteilen ist es unerwünscht, dass beim Beginn des Lösehubes eine "unendliche" Kraft aufgebracht wird. Jede übermässig hohe Kraft würde eine Gefahr für die Beschädigung der wesentlichen Teile im Bereich der Formen bedeuten. Das Ovalradgetriebe hat den Vorteil, dass es einen entsprechenden Totpuntkbereich mit theoretisch unendlicher Kraft gar nicht gibt.

Der Zahneingriff des Zahnstangenantriebes wird derart ausgelegt, dass der Krafteingriff des Übertriebsrades der Antriebswelle etwa in der Mittenachse der Zahnstange liegt. Für die Kraftübertragung stimmt die Wirkachse der Zahnstange mit der entsprechenden Wirkachse des Kurbelantriebes überein. Das Ovalgetriebe wird bevorzugt ausserhalb des Formantriebbereiches fest mit der beweglichen Formhäflte verbunden, mit dem Antriebsmotor zusammengeflanscht und mit der beweglichen Form mitbewegt.

Das Ovalgetriebe kann mit einem Reduktionsgetriebe eine Baueinheit bilden, wobei das Ovalgetriebe vorzugsweise ausgelegt ist für ein Untersetzungsverhältnis von 1 : 3 bis 1 : 8, besonders bevorzugt 1 : 4 bis 1 : 6. Die Reduktionsstufe zwischen Antriebsmotor und Ovalgetriebe weist ein Verhalten von etwa 1 : 30 auf. Es wird ferner vorgeschlagen, dass die Auswerfereinheit eine Auswerferbaugruppe aufweist, bestehend aus einem Zahnstangenübertrieb, einer gegenüber der Form abgestützten Tragplatte sowie der bewegbaren Auswerferplatte mit den Auswerferstiften. Ganz besonders vorteilhaft werden die mechanischen Getriebeteile eines Planetengetriebes sowie das Ovalradgetriebe mit zwei Ovalrädern in einem Getriebegehäuse als Getriebeeinheit zusammengefasst.

Das Ovalgetriebe wird in einem Drehbereich von etwa 20° bis 300° mit Einschluss eines Maximums an Drehmoment und eines Minimums an Drehmoment bzw. eines Minimums an Übertragungsgeschwindigkeit und eines Maximums an Übertragungsgeschwindigkeit ausgewählt.

Zur Optimierung des ganzen Ausstossvorganges in Bezug auf die Weg- und die Kraftfunktion wird vorgeschlagen, dass der elektromotorische Antrieb ein Servomotor ist.

### Kurze Beschreibung der Erfindung

In der Folge wird die neue Erfindung nun an Hand von einigen Ausführungsbeispielen mit weiteren Einzelheiten erläutert. Es zeigen:
- die Figur 1: schemtisch ein Ovalgetriebe mit zwei Ovalrädern;
- die Figur 2: eine Auswerferbaugruppe mit einem Ovalgetriebe;
- die Figur 3: schematisch ein Schnitt III - III durch die Figur 4;
- die Figur 4: eine Ansicht der Auswerferbaugruppe gemäss Pfeil IV der Figur 2;
- die Figur 5: den Kraft- und Geschwindigkeitsverlauf in Bezug auf zwei volle Kreisbewegungen der Ovalräder.

### Wege und Ausführung der Erfindung

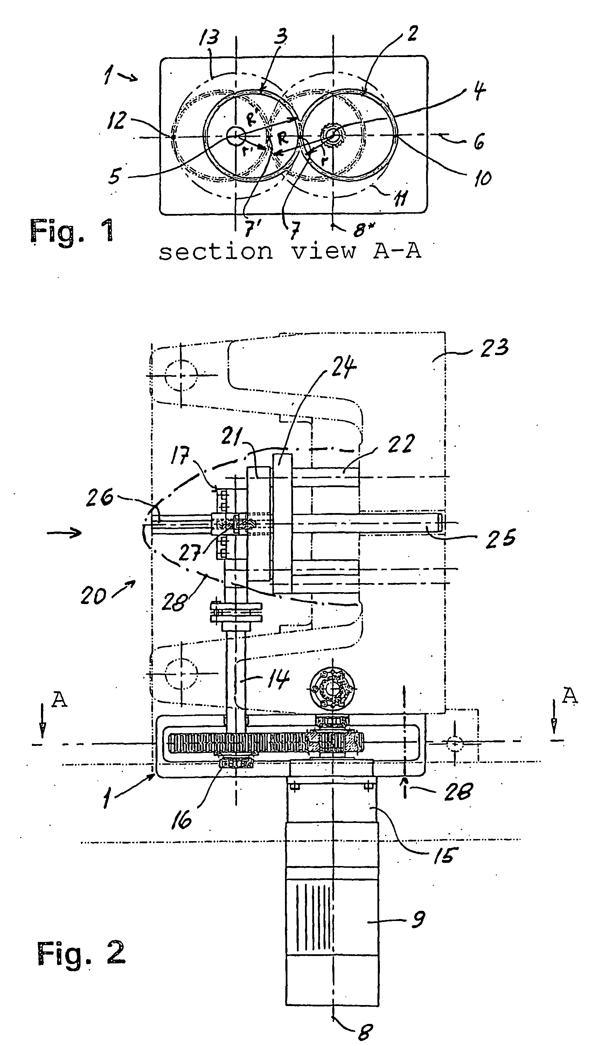

Die Figuren 1 und 2 zeigen ein Ovalradgetriebe 1, in dem zwei Ovalräder 2 und 3 miteinander kämmen. Die ovale Form ist von Auge kaum erkennbar, dagegen die starke Versetzung der Drehachse 4 im Verhältnis zu dem Ovalrad 2 sowie der Drehachse 5 im Verhältnis zu dem Ovalrad 3. Die Drehachsen 4 und 5 haben eine gemeinsame Mittellinie 6, auf welcher auch die Zahneingriffsstelle 7 liegt. Die Drehachse 4 liegt in einer gemeinsamen Ebene (8', 8*), mit der Achse 8 des Antriebsmotores 9. Das Ovalrad 2 durchläuft bei einer vollen Umdrehung mit seinem äussersten Zahnkreis 10 eine kreisförmige Bahn 11. Sinngemäss durchläuft das Ovalrad 3 mit seinem äussersten Zahnkreis 12 eine kreisförmige Bahn 13. Nach einer halben Umdrehung hat sich die Zahneingriffsstelle 7 nach der Stelle 7' verschoben. Das Entscheidende dabei ist, dass bei der ausgezogenen Variante das Ovalrad 2 mit einem Radius r und das Ovalrad 3 mit einem etwa doppelt so grossen Radius R im Eingriff sind. Bei der strichpunktierten Situation ist das Ovalrad 2 mit dem grösstmöglichen Radius R' und das Ovalrad 3 mit dem kleinstmöglichen Radius r' ein Eingriff. Aus der Änderung der Radiusverhältnisse leitet sich eine entsprechende Änderung des übertragbaren Drehmomentes sowie der Umlaufgeschwindigkeit der Abtriebswelle 14 ab. Zwischen dem Antriebsmotor 9 sowie dem Ovalgetriebe 1 ist ein Reduktionsgetriebe 15, welches eine Reduktion von z.B. 1 : 30 aufweisen kann. Das Ovalgetriebe kann für eine Reduktion von 1 : 3 bis 1 : 8, vorzugsweise 1 : 4 bis 1 : 6 ausgelegt werden. Die Abtriebswelle 14 ist im Ovalgetriebe 1 einseitig mit Lager 16 und am anderen Ende in einem Stehlager 17 gelagert, welches Teil ist von einer Auswerferbaugruppe 20. Die Auswerferbaugruppe 20 weist eine Tragplatte 21 auf, welche über kurze Führungsschienen 22 fest mit der beweglichen Form 23 verbunden ist. Auf den Führungsschienen 22 ist eine Auswerferplatte 24 verschiebbar geführt und trägt in Richtung zu der beweglichen Form 23 Auswerferstifte 25. Der lineare Antrieb der Auswerferplatte erfolgt über eine Zahnschiene 26, welche über ein Ritzel 27 angetrieben wird. Das Ritzel 27 sitzt starr auf der Abtriebswelle 14.

Die Bewegung bzw. der Kraftfluss erfolgt damit von dem Antriebsmotor 9 über das Reduktionsgetriebe 15, das Ovalgetriebe 1, die Abtriebswelle 14. Zahnritzel 27 und Zahnstange 26 sowie der Auswerferplatte 24 mit den Auswerferstiften 25. Mit einen strichpunktierten Linie 27 ist etwa der Raumbedarf für die ganze Auswerferbaugruppe markiert. Das Ovalgetriebe 1 ist ausserhalb des rückwärtigen Raumes der beweglichen Form 23 unten an der Form 23 fixiert, wie mit Schrauben 28 angedeutet ist.

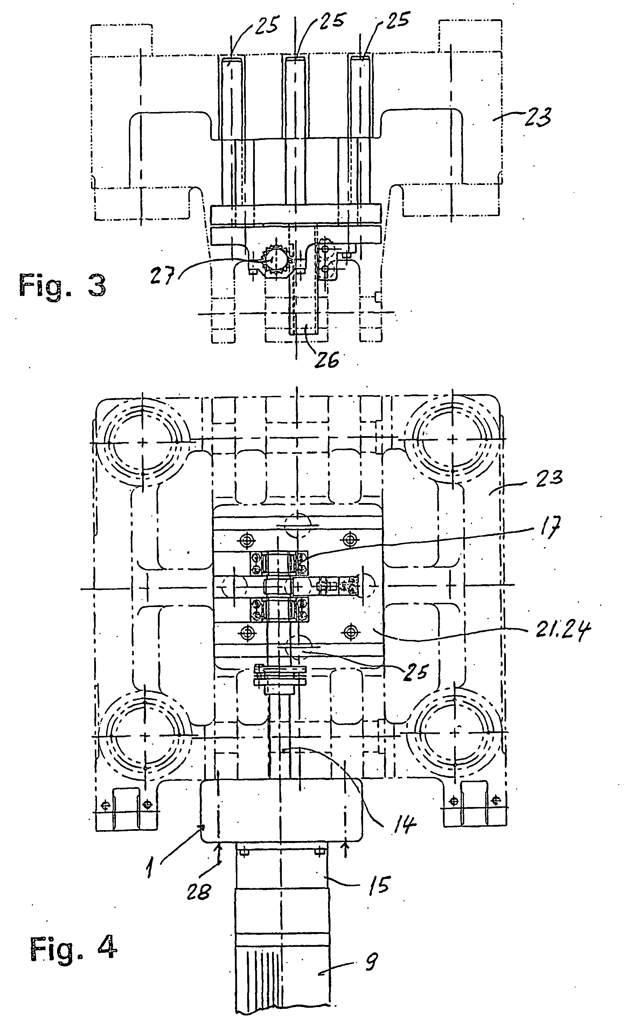

In den Figuren 3 und 4 ist in anderen Ansichten die bewegliche Form 23 sowie die Tragplatte 21 mit Auswerferplatte 24 dargestellt. In der Figur 3 sind drei Auswerferstifte 25 und in der Figur 4 fünf Auswerferstifte eingezeichnet. Die Anzahl der Auswerferstifte richtet sich selbstverständlich nach den konkreten Anforderungen und kann von einem bis zu einer beliebigen Vielzahl liegen.

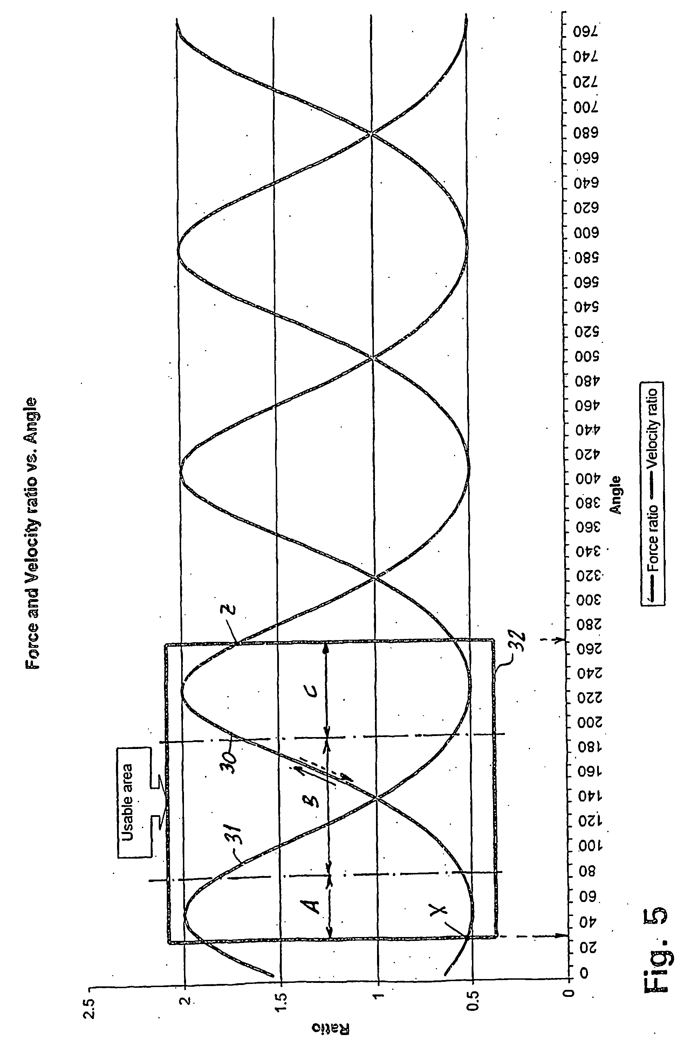

Die Figur 5 zeigt die Geschwindigkeit 30 und das Drehmoment 31 am Ausgang des Ovalgetriebes im Verhältnis zu den entsprechenden Werten. Am Ovalgetriebeeingang über zwei volle Umläufe der Ovalräder 2 und 3. Mit einem Viereck 32 ist ein vorteilhaft nutzbarer Ausschnitt von etwa 30° bis 270°, also ca. 240° Winkelgeraden dargestellt. Der nutzbare Ausschnitt gliedert sich in einen Abschnitt A, den Löseabschnitt. Hier wird die grösste Kraft benötigt, was mit der Verhältniszahl 2 als grössten Wert angedeutet ist. Es folgt ein Abschnitt B mit einer sich stark reduzierenden Kraft, welche bis nahe an die Verhältniszahl 0,5 reicht. In diesem Bereich fällt nicht nur die Kraftübersetzung zusammen; es wird gleichzeitig eine starke, jedoch sich sanft steigernde Abgangs-Geschwindigkeit erzeugt, wie aus der Kurve 30 deutlich erkennbar ist. Im Abschnitt C wird die kleinstmögliche Kraft benötigt. Die ausnützbare Geschwindigkeit reduziert sich am Ende des Abschnittes C leicht. Am Ende des Abschnittes C findet eine Bewegungsumkehr statt. Die Ovalräder 2 und 3 werden mit umgekehrtem Drehsinn von der Position Z wieder an die Position X zurückgedreht. Dies erfolgt durch Drehsinnumkehr des Antriebsmotores 9. Bevorzugt wird dafür ein Servomotor eingesetzt, so dass von dessen interner Steuerung/Regelung eine genaue Positionserkennung möglich ist. Um Schäden zu verhindern, kann der Servomotor eine Drehmomentbegrenzung aufweisen.

## Patentansprüche

1. Auswerfereinheit zum elektromotorisch steuerbaren Ausstossen von Spritzgiessteilen aus Spritzgiessformen über einen linearen Antrieb über die Stossbewegung einer Auswerferplatte (24),
**dadurch gekennzeichnet,**
**dass** sie ein Ovalradgetriebe (1) aufweist, das mit einem Reduktionsgetriebe (15) eine Baueinheit bildet und ausserhalb des Formantriebbereiches fest mit der beweglichen Formhälfte(23)verbunden ist.

2. Auswerfereinheit nach Anspruch 1,
**dadurch gekennzeichnet,**
**dass** das Ovalgetriebe (1) zwei ovale Räder (2, 3) aufweist.

3. Auswerfereinheit nach Anspruch 1 oder 2,
**dadurch gekennzeichnet,**
**dass** das Ovalgetriebe (1) mit einem Motorgetriebe direkt verbunden und ausserhalb des Formantriebbereiches angeordnet ist.

4. Auswerfereinheit nach einem der Ansprüche 1 bis 3,
**dadurch gekennzeichnet,**
**dass** die Stossbewegung der Auswerferplatte (24) durch einen Zahnstangenantrieb erfolgt, welcher über eine Antriebswelle (14) mit dem Ovalgetriebe (1) verbunden ist.

5. Auswerfereinheit nach Anspruch 4,
**dadurch gekennzeichnet,**
**dass** der Zahneingriff (7, 7') des Zahnstangenantriebes derart ausgelegt ist, dass der Krafteingriff des Übertriebsrades der Antriebswelle (14) etwa in der Mittenachse der Zahnstange (26) liegt.

6. Auswerfereinheit nach einem der Ansprüche 1 bis 5,
**dadurch gekennzeichnet,**
**dass** das Ovalgetriebe (1) mit dem Antriebsmotor (9) zusammengeflanscht ist.

7. Auswerfereinheit nach einem der Ansprüche 1 bis 6,
**dadurch gekennzeichnet,**
**dass** das Ovalgetriebe (1) mit einem Reduktionsgetriebe (15) eine Getriebeeinheit bildet und gesamthaft eine Reduktion von 1 : 20 bis 1 : 60 aufweist.

8. Auswerfereinheit nach einem der Ansprüche 1 bis 7,
**dadurch gekennzeichnet,**
**dass** das Ovalgetriebe (1) ausgelegt ist für ein Untersetzungsverhältnis von 1 : 3 bis 1 : 8, vorzugsweise 1 : 4 bis 1 : 6.

9. Auswerfereinheit nach einem der Ansprüche 1 bis 8,
**dadurch gekennzeichnet,**
**dass** die Reduktionsstufe zwischen Antriebsmotor (9) und Ovalgetriebe (1) etwa 1 : 8 bis 1 : 12 beträgt.

10. Auswerfereinheit nach einem der Ansprüche 1 bis 9,
**dadurch gekennzeichnet,**
**dass** sie eine Auswerferbaugruppe (20) aufweist, bestehend aus einem Zahnstangenübertrieb, einer gegenüber der Form abgestützten Tragplatte (21) sowie der bewegbaren Auswerferplatte (24) mit den Auswerferstiften (25).

11. Auswerfereinheit nach einem der Ansprüche 1 bis 10,
**dadurch gekennzeichnet,**
**dass** das Ovalgetriebe (1) in einem Drehbereich von etwa 20° bis 300°, mit Einschluss eines Maximums an Drehmoment und eines Minimums an Drehmoment bzw. eines Minimums an Übertragungsgeschwindigkeit und eines Maximums an Übertragungsgeschwindigkeit ausgewählt wird.

12. Auswerfereinheit nach einem der Ansprüche 1 bis 11,
**dadurch gekennzeichnet,**
**dass** der elektromotorische Antrieb ein Servomotor ist.

## Claims

1. Ejector unit for the ejection, which may be controlled by an electric motor, of injection-moulded parts from injection moulds via a linear drive via the shock motion of an ejector plate (24), **characterised in that** it comprises an oval wheel gear (1), which, together with a reduction gear (15), forms a constructional unit and, outside the mould drive region, is rigidly connected to the movable mould half (23).

2. Ejector unit according to claim 1, **characterised in that** the oval gear (1) comprises two oval wheels (2, 3).

3. Ejector unit according to either claim 1 or claim 2, **characterised in that** the oval gear (1) is directly connected to a motor gear and is arranged outside the mould drive region.

4. Ejector unit according to any one of claims 1 to 3, **characterised in that** the shock motor of the ejector plate (24) takes place by means of a rack-and-pinion drive, which is connected to the oval gear (1) via a drive shaft (14).

5. Ejector unit according to claim 4, **characterised in that** the meshing (7, 7') of the rack-and-pinion drive is configured such that the engagement of force of the overdrive wheel of the drive shaft (14) is located approximately in the central axis of the rack (26).

6. Ejector unit according to any one of claims 1 to 5, **characterised in that** the oval gear (1) is flanged together with the drive motor (9).

7. Ejector unit according to any one of claims 1 to 6, **characterised in that** the oval gear (1), together with a reduction gear (15), forms a gear unit and jointly exhibits a reduction of 1 : 20 to 1 : 60.

8. Ejector unit according to any one of claims 1 to 7, **characterised in that** the oval gear (1) is constructed for a reduction ratio of 1 : 3 to 1 : 8, preferably 1 : 4 to 1 : 6.

9. Ejector unit according to any one of claims 1 to 8, **characterised in that** the reduction step between the drive motor (9) and oval gear (1) is approximately 1 : 8 to 1 : 12.

10. Ejector unit according to any one of claims 1 to 9, **characterised in that** it comprises an ejector assembly (20) consisting of a rack-and-pinion overdrive, a base plate (21) supported relative to the mould, and the movable ejector plate (24) comprising the ejector pins (25).

11. Ejector unit according to any one of claims 1 to 10, **characterised in that** the oval drive (1) is selected in a rotational range from approximately 20° to 300°, including a maximum torque and a minimum torque or a minimum transmission rate and a maximum transmission rate.

12. Ejector unit according to any one of claims 1 to 11, **characterised in that** the electric motor drive is a servomotor.

## Revendications

1. Unité d'éjection destinée à expulser par une commande électromotrice des pièces moulées par injection à partir de moules pour injection par l'intermédiaire d'un entraînement linéaire par le mouvement de choc d'une plaque d'éjection (24),
**caractérisée**
**en ce qu'**elle comprend un engrenage elliptique (1), qui forme avec un engrenage réducteur (15) une unité modulaire et est relié fixement au demi-moule mobile (23) à l'extérieur de la zone d'entraînement du moule.

2. Unité d'éjection selon la revendication 1,
**caractérisée**
**en ce que** l'engrenage elliptique (1) comprend deux roues ovales (2, 3).

3. Unité d'éjection selon la revendication 1 ou 2,
**caractérisée**
**en ce que** l'engrenage elliptique (1) est relié directement à un engrenage motorisé et est disposé à l'extérieur de la zone d'entraînement du moule.

4. Unité d'éjection selon l'une des revendications 1 à 3,
**caractérisée**
**en ce que** le mouvement de choc de la plaque d'éjection (24) s'effectue par un entraînement à crémaillères, lequel est relié à l'engrenage elliptique (1) par l'intermédiaire d'un arbre d'entraînement (14).

5. Unité d'éjection selon la revendication 4,
**caractérisée**
**en ce que** l'engrenage (7, 7') de l'entraînement à crémaillères est dimensionné de telle sorte que la mise en prise de force de la roue de transmission de l'arbre d'entraînement (14) se situe approximativement dans l'axe central de la crémaillère (26).

6. Unité d'éjection selon l'une des revendications 1 à 5,
**caractérisée**
**en ce que** l'engrenage elliptique (1) est assemblé au moteur d'entraînement (9) par des brides.

7. Unité d'éjection selon l'une des revendications 1 à 6,
**caractérisée**
**en ce que** l'engrenage elliptique (1) forme avec un engrenage réducteur (15) une unité d'engrenage et comprend globalement une réduction de 1:20 à 1:60.

8. Unité d'éjection selon l'une des revendications 1 à 7,
**caractérisée**
**en ce que** l'engrenage elliptique (1) est dimensionné pour un rapport de démultiplication de 1:3 à 1:8, de préférence de 1:4 à 1:6.

9. Unité d'éjection selon l'une des revendications 1 à 8,
**caractérisée**
**en ce que** le degré de réduction entre le moteur
d'entraînement (9) et l'engrenage elliptique (1) s'élève approximativement à 1:8 à 1:12.

10. Unité d'éjection selon l'une des revendications 1 à 9,
**caractérisée**
**en ce qu'**elle comprend un sous-groupe d'éjection (20), constitué d'une transmission à crémaillères, d'une plaque de support (21) soutenue par rapport au moule ainsi que de la plaque d'éjection mobile (24) comprenant les tiges d'éjection (25).

11. Unité d'éjection selon l'une des revendications 1 à 10,
**caractérisée**
**en ce que** l'engrenage elliptique (1) est sélectionné dans une plage de rotation d'approximativement 20° à 300°, en incluant un couple de rotation maximal et un couple de rotation minimal et/ou une vitesse de transmission minimale et une vitesse de transmission maximale.

12. Unité d'éjection selon l'une des revendications 1 à 11,
**caractérisée**
**en ce que** l'entraînement électromoteur est un servomoteur.
